(19) Europäisches Patentamt
European Patent Office
Office européen des brevets

(11) Publication number: 0 303 914 A2

(12) # EUROPEAN PATENT APPLICATION

(21) Application number: 88112799.7

(51) Int. Cl.⁴: C07C 125/065

(22) Date of filing: 05.08.88

(30) Priority: 13.08.87 US 85436

(43) Date of publication of application: 22.02.89 Bulletin 89/08

(84) Designated Contracting States: CH DE FR GB LI SE

(71) Applicant: AIR PRODUCTS AND CHEMICALS, INC.
P.O. Box 538
Allentown, Pennsylvania 18105(US)

(72) Inventor: Starner, William E.
359 Ridge Street
Freeland, PA 18224(US)
Inventor: Milligan, Barton

Coplay, PA 18037(US)

(74) Representative: Kador & Partner
Corneliusstrasse 15
D-8000 München 5(DE)

(54) **Urethane linked hydroxy aromatic amines.**

(57) This invention relates to urethane linked hydroxy aromatic amines and to a process for producing such urethane linked hydroxy aromatic amines. The compositions are formed by initially reacting one equivalent aromatic diisocyanate with one equivalent of an alkylene polyol under conditions such that only one of the isocyanate groups reacts with one hydroxyl group of the polyol. Conditions are controlled such that only the urethane linked hydroxy aromatic isocyanate is formed. Then, the resulting urethane linked hydroxy aromatic isocyanate is hydrolyzed to form the amine.

EP 0 303 914 A2

Xerox Copy Centre

# URETHANE LINKED HYDROXY AROMATIC AMINES

## TECHNICAL FIELD

This invention relates a process for producing monohydroxy aromatic monoamine or alternatively a urethane linked hydroxy aromatic amine.

## BACKGROUND OF THE INVENTION

Mononuclear aromatic polyamines are well known and are widely used in the preparation of polyurethane/urea elastomers. These mononuclear aromatic diamines generally include compositions such as toluenediamine, phenylenediamine, chlorotoluenediamine and the like. In the preparation of polyurethane and polyurea elastomers, aromatic diisocyanates are reacted with a long chain polyol to produce a prepolymer which then may be further reacted with aromatic diamine to form a polyurethane or polyurethane/urea elastomer. The long chain polyol provides flexibility and elastomeric properties to the resin, while the short chain polyol or aromatic diamine provides short chain segments to cross-link and add toughness and rigidity to the resulting resin.

A major problem with some mononuclear aromatic diamines is that they are toxic and because of their low molecular weight, tend to be quite volatile. Because of their toxicity and volatility, extreme care must be taken in the work place to avoid inhalation and damage to the respiratory tract and contact with the skin. There is some literature on the subject of reacting aromatic diisocyanates, particularly toluene diisocyanate, with short chain polyols to increase their molecular weight and reduce volatility and the utilization of these polyol extended aromatic diisocyanates in the formation of polyurethanes. But, to our knowledge such action has not been taken with the diamine.

## SUMMARY OF THE INVENTION

This invention relates to a process for producing urethane linked hydroxy aromatic amines by the reaction of a hindered aromatic diisocyanate with an aliphatic polyol to form a hydroxy isocyanate and the subsequent hydrolysis of the isocyanate group to the amine. The reaction is carried out in the presence of a solvent at a temperature and for a time sufficient to effect reaction of one isocyanate group but insufficient to effect reaction of the second isocyanate group on the aromatic ring. The hydroxy aromatic isocyanate reaction product is then isolated from the reaction medium and has the general formula:

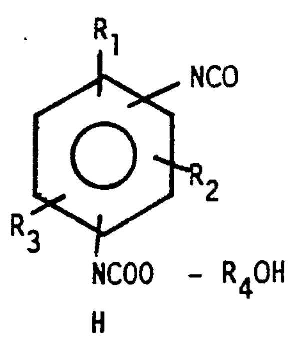

$R_1$ is $C_{1-5}$ aliphatic, $C_{1-5}$ aliphatic ether or $C_{1-6}$ carboxylic acid ester;
$R_2$ and $R_3$ are hydrogen, $C_{1-6}$ aliphatic, $C_{2-6}$ olefinic, $C_{1-6}$ carboxylic acid ester, $C_{1-6}$ aliphatic ether, CN, and halogen and $R_4$ is aliphatic.

The residual NCO group then is hydrolyzed to the amine by the addition of a base. The resultant product is a urethane linked aromatic amino alcohol.

The urethane linked hydroxy aromatic amines provide multiple advantages in elastomer synthesis. These advantages include:
the inclusion of highly reactive functional groups, i.e., an amine group and a hydroxy group which provides a mechanism for producing cross-linked polyurethane/urea elastomers;
an ability to produce unique polyurethane/urea elastomers by virtue of the flexibility to substitute the urethane linked hydroxy aromatic amine for either the amine providing component or polyol component in the urethane formulation on a 1:1 equivalent basis; and
an ability to control the hard segments and soft segments in a polyurethane/urea elastomer thereby permitting one to produce a variety of elastomers having different elastomeric properties.

## DETAILED DESCRIPTION OF THE INVENTION

In the practice of this invention an aromatic diisocyanate is reacted with a polyol to form a hydroxy aromatic isocyanate which then can be hydrolyzed to the amine. The aromatic diisocyanates suited for practicing the invention are represented by the formula:

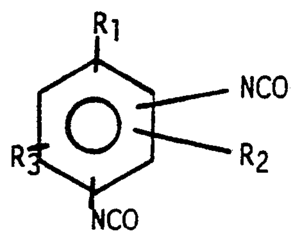

$R_1$ is $C_{1-6}$ aliphatic, $C_{1-6}$ aliphatic ether or $C_{1-6}$ carboxylic acid ester;
$R_2$ and $R_3$ are hydrogen, $C_{1-6}$ aliphatic, $C_{2-6}$ olefinic, $C_{1-6}$ carboxylic acid ester, $C_{1-6}$ aliphatic ether, CN and halogen. Usually $R_1$ is $C_1$ methyl and $R_2$ and $R_3$ are hydrogen although $R_2$ and $R_3$ may be $C_{1-6}$ alkyl or other group. Typically there is only one and not more than three substituents pendant from the mononuclear aromatic diisocyanate.

Representative aromatic diisocyanates may be substituted with a variety of components, provided they do not interfere with the reaction with polyol. Examples of substituents which can be substituted on the ring include halogen atoms, such as, iodine, bromine, chlorine, and fluorine; amide, lower alkyl ($C_{1-4}$)ester, nitrile and other groups. Specific mononuclear aromatic diisocyanates suited for the reaction include 2,4- and 2,6-toluenediisocyanate and mixtures, 1,3-dimethyl-2,4-and 2,6-benzenediisocyanate, chloro toluenediisocyanate, 3-isopropyl-2,6-toluenediisocyanate, 5-isopropyl-2,4-toluenediisocyanate, 5-tert-butyl-2,4-toluene-diisocyanate, 3-tert-butyl-2,6-toluene-diisocyanate, 1-methyl-3,5-diethyl-2,4- and 2,6-toluenediisocyanate, 5-cyclopentyl-2,4-toluene-diisocyanate, 3,-cyclopentenyl-2,6-toluene-diisocyanate, 1,3,5-mesitylene- diisocyanate, 1,3-diethyl-2,4- and 2,6-benzenediisocyanate, 2-tert-butyl-para-phenylenediisocyanate, 5-cyclopentenyl-2,4-toluenediisocyanate, 3-cyclopentyl-2,6-toluene-diisocyanate and 3,5-dicyclopentenyl 2,4- and 2,6-toluenediisocyanate.

The other reactant used in the process of forming a urethane linked hydroxy aromatic isocyanate is an aliphatic polyol. Typically these are those diols or triols that have from about 2 to 10 carbon atoms, preferably 2-6 carbon atoms. Glycols such as ethylene glycol, diethylene glycol, 1,3-butylene glycol, 1,3-propane diol, 1,2-propane diol, 1,2-butane diol, 1,4-butane diol, 1,2-pentane diol, 1,5-pentane diol, 1,4-hexane diol, 1,6-hexane diol and 2-butene-1,4-diol, glycerol, penterythritol are representative of the polyols that can be reacted with the isocyanate to produce the urethane linked hydroxy aromatic isocyanate compositions. One can also use long chain polyols, e.g., those having more than 10 carbon atoms, and particularly those polymeric polyols having molecular weights of at least 150 to about 1000 and above, to form common isocyanate prepolymers. Examples include polyether polyols such as polytetramethylene glycol (PTMG), polyethylene ether glycol, polypropylene ether glycol, and polycaprolactone triol.

Although not intending to be bound by theory, it is believed that the primary reason one can form the urethane linked hydroxy aromatic isocyanate composition and thus synthesize the hydroxy aromatic amine is that the reaction of a first isocyanate group in a substituted aromatic diisocyanate with a hydroxy group is relatively fast and that reaction of the second isocyanate group with a hydroxy group is relatively slow. Because of this difference in reactivity of the first isocyanate group and the second isocyanate group in the

aromatic ring, one can terminate the reaction after formation of the urethane linked hydroxy aromatic isocyanate.

A second belief is that the reaction of an aromatic diisocyanate with a polyol, particularly a short chain polyol, permits the formation of a cyclic ring between the free hydroxyl and isocyanate groups and thereby form a stable intermediate. This belief is confirmed through diagrams based upon molecular mechanical modeling showing that a minimum energy level is observed in a urethane linked hydroxy aromatic composition when the short chain diol is cyclized between the one isocyanate group to the other with a terminal hydrogen atom pointing directly to the second isocyanate group.

A third belief is tht the terminal hydroxy group in a urethane linked hydroxy aromatic isocyanate is less reactive than the hydroxy group in unreacted polyol, e.g., aliphatic diol. Therefore, the reaction of the terminal hydroxyl group with a first isocyanate group on an aromatic diisocyanate does not proceed prior to reaction of a first hydroxyl group of the diol with a first isocyanate group. Because of the apparent reactivity differential between the first and second isocyanate group in the aromatic diisocyanate and the reactivity of the first hydroxy group in an aliphatic difunctional diol, as compared to a terminal hydroxyl group, in the urethane linked hydroxy aromatic, one can limit this reaction to one equivalent isocyanate to one equivalent hydroxyl thereby producing a urethane linked hydroxy aromatic isocyanate.

Even though there is an apparent difference in reactivity between the first and second isocyanate groups in an aromatic diisocyanate as defined and a difference in reactivity between the hydroxyl group of a polyol, as compared to the terminal hydroxy group in a urethane linked hydroxy aromatic isocyanate, the relative difference is not substantial and extreme care must be taken in order to prevent the reaction of the terminal hydroxy group with either a first or second isocyanate group in an aromatic diisocyanate to prevent the formation of oligomers. The ease in which the urethane linked aromatic isocyanate is formed is directly related to the reactivity of the isocyanate group itself and, in particular, those isocyanates where one of the isocyanates is blocked by a substituent having an electronegative group or some bulkiness to provide steric hindrance. Where such situation exists, one can more easily obtain the urethane linked aromatic hydroxy isocyanate.

Several criteria appear to be helpful in order to produce the urethane linked hydroxy aromatic isocyanate compositions; one is that the reaction be carried out in the presence of a solvent where at least the reactants and reaction products are soluble; and two, the reaction is carried out at a temperature sufficiently low such that only the first isocyanate group in the aromatic isocyanate reacts. The solvent aids in diluting the reactants and reaction product and by such dilution, minimizes the chance of reaction of the terminal hydroxyl group on the urethane linked hydroxy aromatic isocyanate with another isocyanate group. Solvents which can be used are those which the reactants and reaction product are soluble but which do not interefere with the reaction between the difunctional aliphatic polyol and aromatic diisocyanate. Examples of solvents suited for practicing the process include acetone, dioxane, tetrahydrofuran, acetonitrile and so forth.

By and large, the major parameter influencing and permitting the formation of the urethane linked hydroxy aromatic isocyanate is temperature. Temperature may vary depending upon the reactivity of the aromatic diisocyanate utilized. For example, phenylene diisocyanate, which is unsubstituted, has about equal reactivity between the first and second isocyanate group and it may be more difficult to limit reactivity to a single isocyanate group than a substituted aromatic isocyanate, such as toluenediisocyanate. Toluene diisocyanate does have a sufficient difference in reactivity between the isocyanate groups, and although that reactivity difference is not substantial, it is sufficient to permit control of reaction through temperature. Chloro toluenediisocyanate or a tert-butyl toluenediisocyanate or tert-butyl phenylenediisocyanate where the tert butyl group is ortho to an isocyanate group are compositions which also have a substantial reactivity difference between the first and second isocyanate group and slightly higher temperatures can be utilized in order to synthesize the urethane linked hydroxy aromatic derivative.

The temperature of reaction for preparing such hydroxy isocyanates typically is between about -25 °C to 30 °C, and preferably from about 5° to about 20 °C. When the temperature of reaction is increased above the 30 °C level e.g. to about 50-70 °C, one may form substantial amounts of dimers and oligomers. The best temperature range for forming the urethane linked hydroxy aromatic isocyanate composition is that where the reaction between the first isocyanate group and a hydroxyl group of the polyol is relatively fast, while insufficient for effecting reaction between the terminal hydroxyl group on the urethane link to another isocyanate group. One of the simpler ways of determining this temperature range for a given reactant system requires monitoring of the reaction through high performance liquid chromatography (HPLC). Liquid chromatography permits one to identify intermediates as well as the reactants and higher molecular weight oligomers in the reaction product. By monitoring free isocyanate content of the reaction product, and the extent of dimer and oligomer formation, one can select an appropriate temperature, within

a temperature range to permit synthesis of the intermediate in high yield and selectivity. Of course, as the temperature is increased within this particular range, one may form a product mix that will possibly contain some higher molecular weight dimers and oligomers. If dimer and oligomer content is excessive, the temperature or reaction time should be reduced to minimize oligomer production and maximize the production of intermediate.

The ratio of aromatic diisocyanate to polyol may vary over a wide range since the urethane linked hydroxy aromatic isocyanate is relatively stable in the presence of both reactants and reaction product. Therefore, a broad range, for example 0.2-5, equivalents isocyanate per equivalent hydroxyl group in the aromatic diisocyanate and aliphatic difunctional polyol, respectively, may be used. However, for purposes of facilitating separation of reactant from product, a reactant ratio closer to stoichiometric, e.g., 0.8-1.2 equivalents aromatic diisocyanate per equivalent aliphatic difunctional diol is utilized, and preferably the ratio is stoichiometric, i.e., 1:1. The stoichiometric ratio permits one to form the urethane linked hydroxy aromatic isocyanate and separate the reaction product for use without substantial processing and it also reduces the amount of oligomer formation. The reaction product can be recovered by distillation of the solvent or extracting the reaction product from the solution by contacting the reaction mixture with a solvent in which the reaction product is insoluble and the reactants are soluble. Hexane and other aliphatic hydrocarbons are suitable solvents for effecting this extraction. Thus, when the reaction mixture is contacted with hexane, the reaction product precipitates from the solution. If reactant ratios other than stoichiometric are used, generally additional processing is required to recover reactant from the solvent. This is usually done by distillation of the solvent to free reactant therefrom. For this reason, reactant equivalent ratios other than stoichiometric (1:1) are not used or preferred because of the additional processing required to produce the reaction product, and no significant enhancement in terms of yield of selectivity is achieved.

The reaction time used for effecting the reaction between the aromatic isocyanate and polyol is primarily dependent on temperature. Reaction times may range from a few minutes, e.g., 5 minutes to several hours, e.g., 24 hours. As previously noted though at high temperatures it may be difficult or impossible to limit reaction to a single equivalent on an isocyanate to a single hydroxyl on the polyol and thereby produce dimers and oligomers. At lower temperatures and at preferred stoichiometry the reaction will stop without dimer and oligomer formation. Reaction times may average from about 15 minutes to 3 hours.

The conversion of the isocyanate group to the amine can be accomplished by known procedures. This procedure usually involves a hydrolysis of the isocyanate to the amine by contacting the isocyanate with water in the presence of a base. Examples of base materials which can be utilized include alkali metal hydroxide and tertiary amines.

One procedure involves contacting the isocyanate with water in the presence of water-miscible polar solvent. Optionally a metal catalyst can be used in an amount of from about 0.01 to 1 part by weight. Examples of polar water soluble solvents are dimethyl formamide, N-methyl pyrollidone, and dimethyl acetamide. A representative of catalyst is dibutyl tin dilaurate.

Another procedure for effecting hydrolysis of the isocyanate to the amine comprises contacting the isocyanate with a basic material and water to form a carbamate intermediate and then converting the carbamate to the amine group. Basic compounds used in the hydrolysis include alkali metal hydroxides, alkaline earth metal hydroxides, alkaline metal silicates, and alkali metal sulfides. The intermediate carbamate group is converted to the amine group by contacting the carbamate-containing mixture with a proton donor and heating. An example of a proton donor is a water-soluble mineral acid or acidic ion exchange resin. Further detail regarding the conversion of isocyanate groups to amine groups are set forth in U.S. 4,532,317; 4,540,720; and 4,515,923 which are incorporated by reference.

The following examples are provided to illustrate various embodiments of the invention are not intended to restrict the scope thereof.

## EXAMPLE I

Preparation of Aromatic Hydroxy Isocyanate and Subsequent Conversion to Amine

To a clean, dry, one-liter reaction flask equipped with stirrer, dropping funnel, thermometer and $N_2$ purge was added 400 ml of tetrahydrofuran and 174 gm (2 equivalents) of a toluenediisocyanate isomer mixture containing 80% of the 2,4- and 20% of the 2,6-isomer. The temperature of the solution was maintained below 50 °C while adding dropwise over a one hour period 90 gm of 1,4-butanediol (2 equivalents). The product analyzed as the hydroxybutyl tolueneisocyanate. The solution containing hydroxybutyl toluene isocyanate was stirred for 3 hours at 50 °C followed by dropwise addition to 80 grams of solution of 10% NaOH in $H_2O$. The resulting mixture was stirred for 1 hour and neutralized to pH 7.0 with 30% hydrochloric acid. After 1 hour of stirring, the aqueous phase separated from the organic layer and the organic layer collected. Volatiles were removed from the product by vacuum distillation yielding 224.6 gm of product which by mass spectroscopy had a molecular weight of 237 and by wet chemical methods had the properties below:

| | Actual | Based on Proposed Structure |
|---|---|---|
| Total Amine MEQ/gm | 3.92 | 4.20 |
| Hydroxyl Number | 459 | 471 |

(MEQ/gm refers to milliequivalents amine/gram of composition).

The above procedure and data shows that the initial composition was hydroxybutyl tolueneisocyanate and it was this composition that was hydrolyzed to form the hydroxy butyl tolueneamine. Any excess butanediol remaining in the reaction product was extracted when the aqueous layer was separated from the organic layer. Any residual toluenediisocyanate remaining in the reaction product would have been converted to toluenediamine and the total amine value would have been much higher than 3.92; toluenediamine has an MEQ/gm of 16.4.

## Example II

Preparation of Hydroxy Aromatic Isocyanate and Subsequent Conversion to Amine

To a clean, dry one-liter 3 necked reaction flask equipped as in Example 1 was added 400 gm of dry acetone and 174 gm of 20/80 mixed isomer toluenediisocyanate (2 equivalents). The temperature of the solution was reduced to 5 °C and held there while adding dropwise over a 1 hour period, 62 gm of ethylene glycol (2 equivalents). The reaction was monitored using HPLC and analysis indicated the hydroxy isocyanate composition. The solution was stirred for 3 hours at 5 °C followed by dropwise addition to a solution of 100 gm of NaOH and 900 ml $H_2O$. The resulting solution was then treated as in Example I to yield a product having a molecular weight of 210 by mass spectroscopy and gel permeation chromatography and the following properties obtained by wet chemical analysis for the amino aromatic alcohol were:

| | Actual | Based on Proposed Structure |
|---|---|---|
| Total Amine MEQ/gm | 4.93 | 4.80 |
| Hydroxyl Number | 512 | 534 |

## Example III

### Polyurethane Elastomer Using Urethane Linked Hydroxy Aromatic Amine

A polyurethane elastomer plaque was prepared using the urethane linked hydroxy aromatic amine from Example 1 in a conventional manner. Briefly, the elastomer was prepared by reacting the urethane linked hydroxy aromatic amine with a polyisocyanate prepolymer sold under the trademark Adiprene L-167 prepared from 2,4-toluenediisocyanate and a 1000 molecular weight poly(tetramethylene glycol). An isocyanate index of 1.05 was used. Physical testing was conducted on the plaque and the results reported are in Table I.

| Polyurethane Elastomer | |
|---|---|
| Shore A hardness | 87 |
| Shore D hardness | 37 |
| 100% Tensile (PSI) | 590 |
| 200% Tensile (PSI) | 1010 |
| 300% Tensile (PSI) | 1620 |
| Break Tensile (PSI) | 2080 |
| % Elongation (%) | 380 |

The physical test data in Table 1 shows that there was reactive amine functionality and hydroxyl functionality to form a cured product.

## Claims

1. A process for producing a urethane linked hydroxy aromatic amine which comprises the steps:
(a) contacting an aromatic diisocyanate of the formula

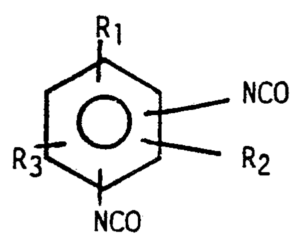

wherein
$R_1$ is $C_{1-6}$ aliphatic, $C_{1-6}$ aliphatic ether or $C_{1-6}$ carboxylic acid ester;
$R_2$ and $R_3$ are hydrogen, $C_{1-6}$ aliphatic, $C_{2-6}$ olefinic, $C_{1-6}$ carboxylic acid ester, $C_{1-6}$ aliphatic ether, nitrile and halogen with an aliphatic polyol;
maintaining a temperature for a time sufficient to effect reaction between a first isocyanate group of said aromatic isocyanate with a first hydroxy group of said aliphatic polyol thereby forming a urethane link, but insufficient for effecting reaction between the terminal hydroxyl group of the reacted polyol with another isocyanate group to form an urethane linked hydroxy aromatic isocyanate; and,
converting the residual isocyanate group of said urethane linked hydroxy aromatic isocyanate to the amine.

2. The process of claim 1 wherein said temperature of the reaction in forming said urethane linked hydroxy aromatic isocyanate is from about -25 to about 30 °C.

3. The process of claim 2 wherein the temperature range is from about 5 to 20° C and the equivalents of isocyanate of said aromatic diisocyanate equivalents to equivalents of hydroxyl group in said aliphatic polyol charged for reaction is from 0.8-1.2 to 1 and the reaction time is from about 15 minutes to 3 hours.

4. The process of claim 3 wherein $R_1$ is $C_1$ methyl and $R_2$ and $R_3$ are hydrogen.

5. The process of claim 3 wherein $R_1$ is $C_1$ methyl $R_2$ is tert-butyl and $R_3$ is hydrogen.

6. The process of Claim 4 wherein said aliphatic polyol is a $C_2$-$C_6$ aliphatic diol.

7. The process of Claim 6 wherein aliphatic diol is ethylene glycol.

8. The process of Claim 6 wherein said polyol is propylene glycol.

9. The process of Claim 6 wherein said polyol is butane diol.

10. The process of Claim 4 wherein said aliphatic polyol is a polyether polyol.

11. The process of Claim 10 wherein the molecular weight of said polyether polyol is from 150 to 1000.

12. The process of Claim 11 wherein said polyether polyol is polytetramethylene glycol, polyethylene glycol polypropylene glycol or polycaprolactone.

13. A urethane linked hydroxy aromatic amine represented by the formula:

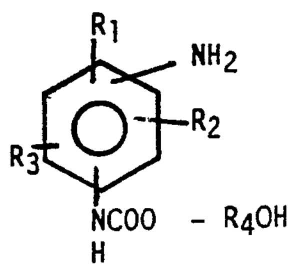

$R_1$ is $C_{1-6}$ aliphatic, $C_{1-6}$ aliphatic ether or $C_{1-6}$ carboxylic acid ester;
$R_2$ and $R_3$ are hydrogen, $C_{1-6}$ aliphatic, $C_{2-6}$ olefinic, $C_{1-6}$ carboxylic acid ester, $C_{1-6}$ aliphatic ether, nitrile and halogen and $R_4$ is the residue of an aliphatic polyol.

14. The composition of Claim 13 where $R_1$ is $C_1$ methyl.

15. The composition of Claim 14 wherein $R_2$ and $R_3$ are hydrogen.

16. The composition of Claim 14 wherein $R_2$ and $R_3$ are $C_2$ ethyl.

17. The composition of Claim 14 wherein $R_2$ is tert-butyl and ortho to an amine group.

18. The composition of Claim 15 wherein $R_4$ is the residue of a $C_{2-6}$ aliphatic diol.

19. The composition of Claim 18 wherein $R_4$ is $C_2$ the residue of ethylene glycol.

20. The composition of Claim 18 wherein $R_4$ is the residue of propylene glycol.

21. The composition of Claim 18 wherein $R_4$ is the residue of butane diol.

22. The composition of Claim 15 wherein said aliphatic polyol is a polyether polyol.

23. The composition of Claim 22 wherein said polyether polyol has a molecular weight from 150 to 1000.

24. The composition of Claim 23 wherein the polyether polyol is polytetramethylene glycol, polycaprolactone, polypropylene glycol, or polyethylene glycol.